# EUROPÄISCHE PATENTSCHRIFT

(11) **EP 0 829 075 B1**
(45) Veröffentlichungstag und Bekanntmachung des Hinweises auf die Patenterteilung: **27.02.2002**
(21) Anmeldenummer: 96919552.8
(22) Anmeldetag: 18.05.1996
(51) Int. Cl.: G08G 1/0962

(54) **VERFAHREN UND ELEKTRONISCHE EINRICHTUNG ZUR VERMITTLUNG REGIONAL GÜLTIGER FUNK-INFORMATIONEN AN EINEN FAHRER BZW. AN INSASSEN EINES KRAFTFAHRZEUGS**
PROCESS AND ELECTRONIC DEVICE FOR CONVEYING REGIONALLY APPLICABLE RADIO INFORMATION TO A DRIVER OR PASSENGERS IN A MOTOR VEHICLE
PROCEDE ET DISPOSITIF ELECTRONIQUE PERMETTANT DE COMMUNIQUER DES INFORMATIONS RADIO VALABLES AU PLAN REGIONAL A UN CONDUCTEUR OU AUX OCCUPANTS D'UNE AUTOMOBILE

(30) Priorität: 01.06.1995 DE 19520148
(43) Veröffentlichungstag der Anmeldung: 18.03.1998
(73) Patentinhaber: ADAM OPEL AG, 65423 Rüsselsheim (DE)
(72) Erfinder: BERNINGER, Harald, D-65428 Rüsselsheim (DE)
(86) Internationale Anmeldenummer: DE9600878
(87) Internationale Veröffentlichungsnummer: WO9638830

(56) Entgegenhaltungen:
- EP-A- 0 618 531
- DE-A- 4 243 511

## Beschreibung

Die Erfindung bezieht sich auf ein Verfahren zur Vermittlung regional gültiger Funk-Informationen an einen Fahrer bzw. an Insassen eines Kraftfahrzeugs mit den im Oberbegriff des Patentanspruchs 1 angegebenen Merkmalen sowie auf eine elektronische Einrichtung zur Durchführung des Verfahrens nach dem Oberbegriff des Patentanspruchs 3.

Der Kraftfahrzeugverkehr auf den Straßen der Städte und Regionen wird zunehmend komplizierter, da die Verkehrsdichte ständig steigt, immer aufwendigere Verkehrsleitsysteme Anwendung finden, der Anteil an ortsunkundigen Verkehrsteilnehmern zunimmt und, neben vielen anderen Gründen, die Kapazitäten der Parkflächen vielfach ausgelastet sind. Um möglichst schnell ein gewünschtes Ziel zu erreichen, sind Fahrzeuginsassen auf Informationen angewiesen, wobei es sich als nicht ausreichend erwiesen hat, diese Informationen allgemein gültig beispielsweise am Straßenrand ablesbar anzubringen oder über Radiosender zu vermitteln. Individuelle Hilfen für die einzelnen Fahrzeuge sind erwünscht. Dazu sind Verfahren und Vorrichtungen bekannt.

Computer im Fahrzeug stellen den Insassen auf der Basis von Softwareprogrammen Informationen zur Verfügung. In der Zeitschrift "WirtschaftsWoche" Nr. 5/26.01.1995, Seiten 8 und 9 sind beispielsweise neue Navigationssysteme beschrieben, die im Fahrzeug auf der Basis elektronisch gespeicherter Landkarten und einer satellitengesteuerten Navigation Fahrtroutenvorschläge abgeben. Lästiges Lesen großformatiger Landkarten kann damit entfallen. Landkarten von Städten und Regionen werden von den Anbietern der Systeme elektronisch (beispiels- weise auf CD-ROM) gespeichert und können dann in einer mehr oder weniger aktuellen Fassung im Fahrzeug genutzt werden. Zur Positionsbestimmung und zur Verarbeitung aller Daten ist ein umfangreiches Dienstprogramm erforderlich, welches im Fahrzeug abgespeichert sein muß.

Dienstprogramme werden, wie in der EP-A-0 618 531 beschrieben, laufend überarbeitet und aktualisiert, so daß verschiedene Programmversionen eines Programmanbieters existieren. Um dem Programmnutzer die gewünschte Version zu übermitteln, ist in der EP-A-0 618 531 vorgeschlagen, diese über eine Datenübertragungsschnittstelle an mobile Prozessoren zu übertragen. Es handelt sich jedoch um global verwendbare Prozessorsteuerprogramme.

Vom Dienstprogramm werden weitere Funktionen, wie TV, Radio und Telefon, im Fahrzeug gesteuert, und es sind weitere Informationen, beispielsweise zur Lage von Hotels, Krankenhäusern, Flughäfen, Bahnhöfen und Werkstätten erhältlich. Damit ist ein enormer Speicheraufwand erforderlich, und es liegen Daten von Regionen vor, die das Fahrzeug nie befährt. Zusätzlich zu den genannten Informationen bieten Dienstanbieter bestimmter Regionen aktuelle Zusatzinformationen an. Sehr bekannt sind über das Radio ausgesendete Verkehrsinformationen, die jedoch, obwohl sie nicht sehr detailliert sind, große und kaum noch aufnehmbare Datenmengen umfassen. Von einigen Städten werden Hilfen beim Finden eines Parkplatzes vorbereitet, wobei hier eine aktuelle Parkplatzsituation an Fahrzeuge übermittelt werden soll und gegebenenfalls ein bestimmter Parkplatz gebucht werden kann, zu dem das Fahrzeug dann per Computerinformation geführt wird. So sind auch absolut aktuelle Stadtpläne mit Baustellen, Staus, Unfällen, Verkehrsdichte-Informationen und Umleitungen in Vorbereitung. Zusätzlich zu Dienstprogrammen wie dem anfangs beschriebenen Navigationssystem sind damit aktuelle, regional gültige Informationen erforderlich, die Fahrzeugen über Datenfunk (Beispiel Traffic Message Channel - TMC) übermittelt werden, und auch Informationen vom Fahrzeug müssen an die Anbieter der Dienstprogramme übermittelt werden. So können auch Hilfen bei der Touristikinformation, der Hotelreservierung, dem Flottenmanagement (Koordination großer Fahrzeugflotten), der Kommunikation (Telefon, Fax) oder der Fahrzeugferndiagnose (Dienst der Werkstätten) geboten werden. Es zeichnet sich eine Vielzahl von Anbietern von Dienstprogrammen ab, wobei diese vorrangig regional tätig werden. Die Fahrzeuge müssen mit einem enormen, oft zu aktualisierenden Datenspeicher ausgerüstet sein. Es entsteht ein erheblicher Aufwand für die Fahrzeugnutzer, wenn alle Informationen gut nutzbar sein sollen.
Es ist Aufgabe der Erfindung, ein Verfahren und eine elektronische Einrichtung zu schaffen, mit Hilfe derer soweit als möglich aktualisierte Dienstprogramme zur Vermittlung regional gültiger Funk-Informationen genutzt werden können, ohne daß den Fahrzeugnutzern ein hoher Aufwand entsteht und die Einrichtung ständig neuen Dienstanbietern anzupassen ist. Es soll des weiteren vermieden werden, dass Fahrzeuge mit Datenspeichern für enorme Datenmengen ausgestattet werden müssen. Im Endeffekt soll der Straßenverkehr entlastet werden, wodurch die Straßen durchlaßfähiger werden, Verkehrsteilnehmer schneller ihr Ziel erreichen, weniger Unfälle passieren und die Umwelt entlastet wird.
Zur Lösung dieser Aufgabe zeichnet sich das Verfahren zur Informationsvermittlung nach dem Oberbegriff des Patentanspruchs 1 durch die im kennzeichnenden Teil des Anspruchs 1 angegebenen Merkmale aus. Eine Einrichtung zur Informationsverarbeitung und -ausgabe, speziell zur Durchführung des Verfahrens, weist die im Patentanspruch 3 angegebenen Merkmale auf. Weitere Einzelheiten der Erfindung ergeben sich aus den Patentansprüchen 2 und 4 bis 7.

Die Erfindung geht aus von der weiter oben beschriebenen Vielzahl von Anbietern verschiedenster Dienstprogramme. Dienstprogramme mit gleichem Zweck können regional unterschiedlich sein, da die Anbieter unterschiedliche Strategien verfolgen. Es werden erfindungsgemäß nur die Dienstprogramme im Kraftfahrzeug gespeichert und somit benutzbar, die auch dort, wo sich das Fahrzeug gerade befindet, nutzbar sind. Dazu werden die Dienstprogramme von Sendestationen der Anbieter aus an die Kraftfahrzeuge übertragen und solange abgespeichert, wie dies sinnvoll ist. Mit Hilfe des Dienstprogrammes (bzw. mehrerer Programme, die regional gültig sind) und von den Anbietern übermittelter aktueller Funk-Informationen können Fahrzeuginsassen dann Hilfestellungen zur Erreichung ihres Ziels erhalten. Eine elektronische Einrichtung zur Informationsverarbeitung und -ausgabe muß damit nicht mehr alle erhältlichen Dienstprogramme in einem Speicher bevorraten. Sie benötigt eine Bedien- und eine Empfangseinheit, so daß auf Wunsch nur regional gültige Dienstprogramme und Funk-Informationen empfangen werden können. Ein Programmspeicher kann kleiner, als dies bei bekannten Systemen notwendig ist, dimensioniert werden, da nur die regional gültigen Dienstprogramme aufgenommen werden müssen. In einer Datenverarbeitungseinheit werden die empfangenen Funk-Informationen auf der Grundlage des anfangs empfangenen Dienstprogramms verarbeitet. Über zumindest eine Ausgabeeinheit (visuelle oder akustische Ausgabe) können die absolut aktuellen Informationen an die Fahrzeuginsassen übermittelt werden. So können die Insassen auch im Ausland Informationen erhalten, ohne daß es erforderlich ist, sich lange auf solche Reisen vorzubereiten, indem erst die richtige Software beschafft werden muß. Man erhält die Dienstprogramme dort, wo man gerade ist. Verläßt man die Region der Gültigkeit eines Dienstprogramms, wird es aus dem Programmspeicher gelöscht, und es entsteht freier Speicherplatz für neue Programme.

Die Übermittlung der Dienstprogramme an ein Kraftfahrzeug kann durch Absenden eines Anforderungssignals dann erfolgen, wenn das Kraftfahrzeug im Gültigkeitsbereich der regionalen Informationen in Betrieb ist. Ein Programm-Manager (bekannt von EDV-Anlagen) verwaltet die Dienstprogramme. Über die Empfangseinheit kann ständig eine Programm-Angebotsliste empfangen werden, die im Fahrzeug anzeigbar ist. So sind die Fahrzeuginsassen über alle verfügbaren Hilfen in der Region informiert. Über die Bedieneinheit können Dienstprogramme, deren Nutzung gewünscht wird, ausgewählt werden, wobei dann ein Anforderungssignal an die entsprechende Sendestation gesandt und das Dienstprogramm an das Fahrzeug übermittelt wird. Es wird durch die Empfangseinheit empfangen und im Programmspeicher abgelegt, von wo ab es zur Nutzung verfügbar ist. Da hier auch kommerzielle Interessen bestehen, kann vor der Programmübertragung an ein Fahrzeug oder vor der Programmnutzung eine Zugriffsberechtigung überprüft werden. Dienstprogramme werden aus dem Programmspeicher gelöscht, wenn ein Programmfehler diagnostiziert wurde (Fehler bei der Programmübertragung), wenn ein erneutes Anforderungssignal für dasselbe Dienstprogramm ausgesendet wird, wenn ein Gebührenbetrag für die Nutzung des Dienstprogrammes bzw. der Regionalinformationen nicht entrichtet wird, wenn das Programm über eine bestimmte Zeitspanne ungenutzt ist und/oder wenn das Kraftfahrzeug den Gültigkeitsbereich der regionalen Funk-Informationen verläßt. Somit werden die Programmspeicher in den einzelnen Fahrzeugen minimal belastet. Die spezifischen Informationen sind aber jederzeit und überall dort verfügbar, wo sie gebraucht werden können. Der Aufwand beim Programmnutzer ist geringer als bei bekannten Systemen, und die Vermarktung durch die Programmanbieter ist mit geringerem Aufwand möglich.

In jedem Fahrzeug sollte ein weiteres elektronisches Speicherelement vorhanden sein, welches unabhängig von dem variablen Programmspeicher Daten und Programme enthält, die nicht regional abhängig sind. Diese allgemein gültigen Daten und Programme können fahrzeug- oder insassenspezifisch sein. Beispielsweise können Fahrzeugeinstellungen (Sitze, Spiegel, Heizung, Radio ...), Telefonkarteien, allgemeine Bordcomputerfunktionen und vieles mehr gespeichert sein. Sowohl die regionalen Dienstprogramme als auch die allgemeinen Programme können in der Datenverarbeitungseinheit Anwendung finden und werden über die Bedieneinheit gesteuert. Die gewünschten Informationen können über die Ausgabeeinheit an die Fahrzeuginsassen weitergegeben werden.

Einzelheiten der Erfindung werden anhand eines Ausführungsbeispiels beschrieben. Von den zugehörigen Zeichnungen zeigt:
- Figur 1:: ein Kraftfahrzeug mit einer erfindungsgemäßen Einrichtung bei Fahrt auf einer Straße;
- Figur 2:: den schematischen Aufbau einer Einrichtung zur Informationsverarbeitung und -ausgabe in dem Kraftfahrzeug nach Figur 1.

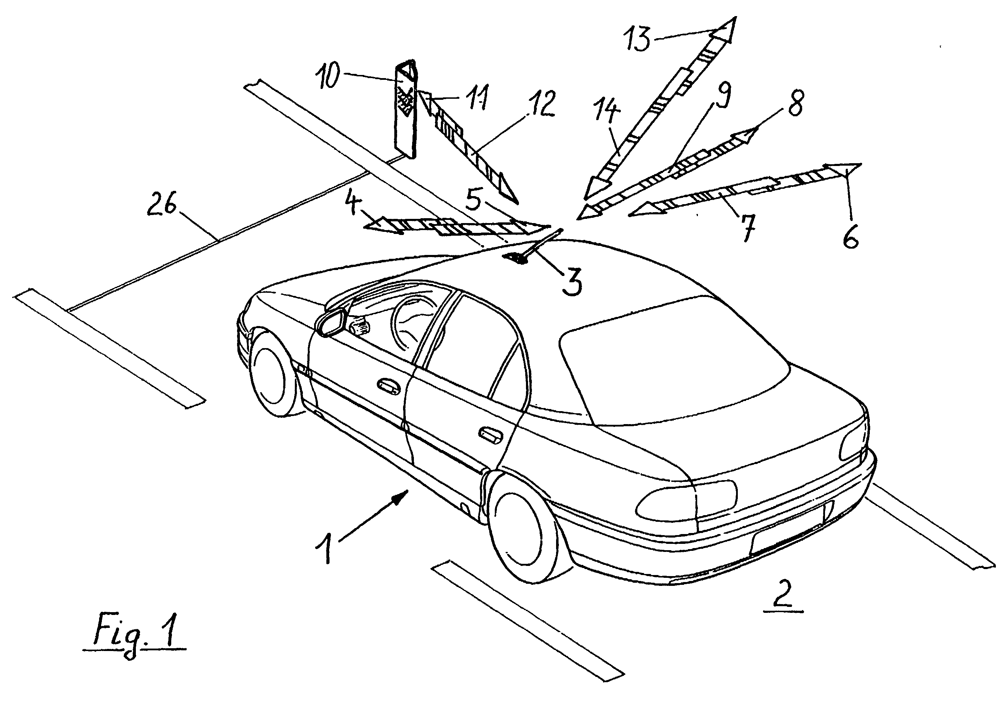

Das in Figur 1 gezeigte Fahrzeug 1 befindet sich auf einer Fahrstrecke 2, welche in einer Region verläuft, wo Informations-Dienstanbieter tätig sind. Über mehrere Sendestationen wird Datenrundfunk ausgestrahlt, wobei neben den Rundfunksendungen auch digitalisierte Informationen an Empfänger übermittelt werden. Beispielsweise befindet sich das Fahrzeug 1 auf der Bundesstraße 8 (in der Bundesrepublik Deutschland) und fährt in südlicher Richtung in den Großraum Frankfurt/Main. Östlich vom Fahrzeug liegt Frankfurt/Main, westlich sind die Städte Wiesbaden und Mainz gelegen. In allen drei Städten sind Dienstanbieter beheimatet, die regionale Funk-Informationen anbieten. Im Ausführungsbeispiel soll eine Beschränkung auf drei Dienstanbieter gelten, wobei praktisch weit mehr als drei Anbieter tätig sein können.

Eine Kommunikation (Datenaustausch) zwischen einer Sende-/Empfangseinheit mit Antenne 3 des Fahrzeugs 1 und den Dienstanbietern ist durch Pfeile 4, 5 (Frankfurt), 6, 7 (Wiesbaden), 8, 9 (Mainz) verdeutlicht. Es können auch Funk-Informationen zwischen dem Fahrzeug 1 und Bestandteilen des regionalen Verkehrsleitsystems, hier entsprechend ausgerüsteter Pfosten 10 am Straßenrand (an sich bekannt aus DE-PS 37 28 949), ausgetauscht werden, was durch die Pfeile 11, 12 angedeutet ist. Es könnten auch andere Systeme zur bidirektionalen Kommunikation anstelle von Pfosten 10 zum Einsatz kommen. Beispielsweise ist die Nutzung von SRC (Short Range Communication)-Baken am Straßenrand möglich. Zusätzlich können Satelliten-Ortungssysteme, die wie Verkehrsleitsysteme bereits bekannt sind, in das Gesamtsystem einbezogen sein. Auch zu diesem Zweck findet ein Informationsaustausch zwischen einem Satelliten eines Satelliten-Netzes und dem Fahrzeug 1 statt (Pfeile 13, 14). Die Pfeile 4, 6, 8, 11, 13 symbolisieren Funk-Informationen (Daten), die vom Fahrzeug 1 ausgehen, wohingegen die Pfeile 5, 7, 9, 12 und 14 vom Fahrzeug 1 empfangbare Funk-Informationen darstellen sollen.

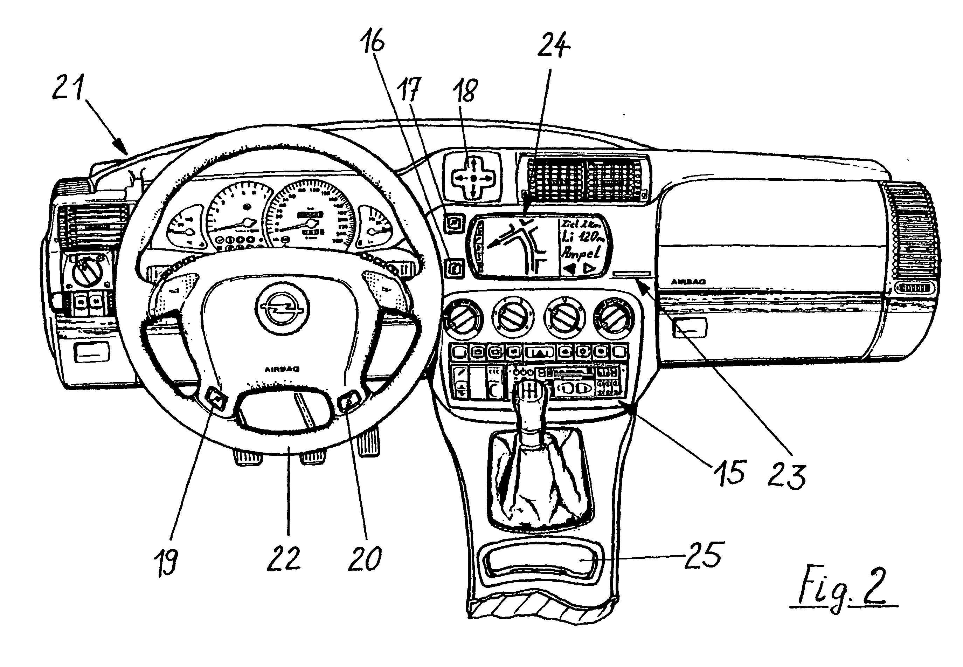

Eine elektronische Einrichtung im Fahrzeug 1 besteht aus einer Empfangseinheit 15, zu der auch die Antenne 3 gehört. Die Empfangseinheit 15 kann beispielsweise, wie in Figur 2 gezeigt, aus einem Datenrundfunkempfänger bestehen. Des weiteren sind Bedienelemente 16, 17, 18, 19, 20 vorzusehen. Über die Bedienelemente 16, 17, 18 in der Armaturentafel 21 sowie die Bedienelemente 19, 20 im Lenkrad 22 sind Funktionen der elektronischen Einrichtung zu steuern. Weitere Bedienelemente können auch dazu Verwendung finden, wobei diese in der Empfangseinheit 15 oder am Lenkrad 22 angeordnet sind. In der Armaturentafel 21 ist eine Code-Karten-Leseeinrichtung 23 sowie ein Display 24 (vorzugsweise ein Farb-Display) vorgesehen. Über das Display 24 können visuelle Informationen an den Fahrer bzw. die Insassen des Fahrzeugs 1 ausgegeben werden. Nicht gezeigte Lautsprecher des Datenrundfunkempfängers 15 können zur Ausgabe akustischer Informationen genutzt werden.

Als nicht sichtbarer Bestandteil der elektronischen Einrichtung ist eine Datenverarbeitungseinheit (mit Mikroprozessor) vorgesehen, die im Netzwerkverbund mit der Empfangs-, Bedien- und Ausgabeeinheit steht. Dieser Einheit sind elektronische Speicher zugeordnet, auf deren Inhalt bei der Datenverarbeitung zurückgegriffen werden kann. Ein Speicherelement ist vorgesehen als Schreib-/Lesespeicher, wobei sein Inhalt ständig, auch selbsttätig veränderbar ist, was weiter unten erläutert wird. Ein zweiter Bestandteil des Speichers ist ein Schreib-/Lese- oder nur Lesespeicher, dessen Inhalt relativ beständig und nur selten zu verändern ist. Es kann vorgesehen sein, daß ein Teil des Speicherinhaltes vom Fahrzeughalter beeinflußbar ist und ein anderer Teil nicht. Dieser Speicher mit relativ festem Inhalt ist vorgesehen zur Speicherung von fahrzeug- oder insassenspezifischen Daten, die regional unabhängig gelten. Dies können Fahrzeugeinstellungen, Diagnosehilfen, allgemeine Auskünfte, Radiosender-Auskünfte, Telefonnummern-Speicher, Adreß-Speicher, also Daten zur allgemeinen Bordcomputerfunktion sein. Es kann auch eine allgemeine Autobahnkarte des Heimatstaates oder Europas abgespeichert sein, auf die über die Bedienelemente 16 bis 20 zugegriffen werden kann, wobei dann auch ein zugehöriges Software-Programm im allgemeinen Speicher abgelegt ist. Die elektronische Einrichtung ist ergänzt, durch ein Telefon 25. Des weiteren können Sensoren einbezogen werden, die Daten beispielsweise über die Umgebungstemperatur, die Fahrgeschwindigkeit oder Sichtverhältnisse liefern. Es kann auch zusätzlich noch eine Lese- oder Schreib-/Leseeinheit wie CD-ROM oder Diskettenlaufwerk vorgesehen sein.

Erfindungswesentlich ist die Anordnung und Nutzung des frei beschreibbaren und ständig aktualisierbaren Speichers. Er wird mit Daten beschrieben, die über die Empfangseinheit 15 empfangen werden. Es werden sowohl gröβere Dienstprogramme (Programme mit regionaler Gültigkeit) als auch dann später im Dienstprogramm nutzbare regionale Funk-Informationen an das Fahrzeug 1 übertragen und in diesem Speicher abgespeichert. Es ist damit möglich, unabhängig vom Aufenthaltsort, regionale Informationen nutzen zu können, ohne einen Datenspeicher mit enormen Datenmengen ständig aktualisiert mit sich führen zu müssen. Die Fahrtvorbereitung ist problemlos, da alle Programme, die unterwegs benötigt werden, erst dann übernommen werden, wenn sie gebraucht werden. Auch bei kurzfristiger Änderung des Fahrtziels kann eine optimale Informationsnutzung erfolgen. Das durchgeführte Verfahren wird im folgenden beschrieben:

Eine Vielzahl von Dienstanbietern haben Software-Programme erarbeitet und bieten diese Programme und zugehörige regionale Informationen Interessenten zur zeitweisen Nutzung an. Beispielsweise wird ein Frankfurter Stadtplan in Verbindung mit einem Pfadfinder angeboten, wobei ganz aktuelle Verkehrsbedingungen Berücksichtigung finden. Baustellen, Staus, Umleitungen und vieles mehr sind einbezogen und aktuelle Informationen werden ständig per Funk angeboten. Des weiteren stellt ein Dienstanbieter ein Parkplatz-Leit- und Buchungssystem zur Verfügung. Der dem Zielort am nächsten liegende freie Parkplatz wird ausgewiesen und kann elektronisch gebucht (also belegt) werden. Anschließend wird der Programm-Nutzer zum Parkplatz geleitet.

Ein Wiesbadener Dienstanbieter stellt ein vergleichbares Parkplatz-Leitsystem zur Verfügung, wobei jedoch eine andere Software genutzt wird. Zusätzlich wird für Wiesbaden ein Touristik-Informationsprogramm angeboten. Stadtrundfahrten und Veranstaltungen werden ausgewiesen und können gebucht werden.

In Mainz steht ein elektronischer Stadtplan eines Dienstanbieters zur Verfügung. Ein anderer Anbieter stellt ein Hotel-Reservierungsprogramm zur Verfügung. Viele weitere Programmmöglichkeiten bestehen, die in Zukunft von Anbietern zur Verfügung gestellt werden. Bei herkömmlichen Systemen müßte sich ein Fahrzeugführer, der eine Reise in die genannten Städte plant, alle Programme vor Reiseantritt beschaffen und im Fahrzeug abspeichern. Programme, die er nicht kennt, kann er auch nicht nutzen.

Gemäß der Erfindung kann die Empfangseinheit 15 des Fahrzeugs 1 alle zur Verfügung stehenden Programme dann empfangen, wenn sie benötigt werden. Über Sendestationen der Dienstanbieter werden sowohl die Dienstprogramme als auch zugehörige aktuelle Informationen übertragen. Alle Angebote, beispielsweise im Umkreis von 50 oder 100 Kilometern um das Fahrzeug 1 werden auf dem Display 24 aufgelistet, sofern die zu den Angeboten gehörenden Dienstprogramme empfangbar sind. Bestimmte Angebote sind von den Fahrzeuginsassen auswählbar. Soll beispielsweise vormittags Wiesbaden und nachmittags Mainz besucht werden, können die Wiesbadener Programme und der Mainzer Stadtplan sowie das Mainzer Hotel-Reservierungsprogramm über die Bedienelemente 16 bis 20 angewählt werden. Daraufhin werden die kompletten Dienstprogramme an die Empfangseinheit 15 übertragen und in dem Programmspeicher, der für regional gültige Daten zur Verfügung steht, abgespeichert. Eine Testroutine kann automatisch durchgeführt werden, so daß die Funktionsfähigkeit der Dienstprogramme gewährleistet ist. Ein Gebührenbetrag kann gleichzeitig, nach einer gewissen Testzeit, die dem Nutzer zur Verfügung steht, oder am Nutzungsende abgebucht werden. Die Gebühr wird entweder direkt von einer Code-Karte im Lesegerät 23 oder von einem der Code-Karte zugeordneten Konto abgebucht. Die Programme sind anschließend voll im Fahrzeug nutzbar. Die Frankfurter Dienstprogramme werden nicht übertragen und abgespeichert, da sie nicht benötigt werden. Wird das Fahrtziel geändert, können die entsprechenden Dienstprogramme kurzfristig aufgerufen werden. Alle Dienstprogramme sind immer absolut aktuell, was nicht möglich ist, wenn sie über ein Vertriebsnetz auf Diskette oder CD-ROM angeboten werden.

Die Dienstprogramme werden wieder aus dem speziellen Programmspeicher gelöscht, wenn ein Übertragungsfehler diagnostiziert wurde, wenn ein erneutes Anforderungssignal vom Fahrzeug 1 zur Sendestation übertragen wird, wenn ein fälliger Gebührenbetrag nicht abbuchbar ist, wenn das Programm über lange Zeit ungenutzt bleibt oder wenn das Fahrzeug 1 die Region der Gültigkeit des Dienstprogramms verläßt. So wird die unnötige Belegung von Speicherplatz vermieden und die unberechtigte Programmnutzung ausgeschlossen.

Die Fahrzeuginsassen können jetzt in Wiesbaden einen Parkplatz lokalisieren, finden und belegen und die dortigen Touristik-Informationen nutzen. Der Mainzer Stadtplan steht zur Verfügung und ein Hotel in Mainz kann gebucht werden.

Die Dienstprogramme, die im Fahrzeug abgespeichert sind, werden durch aktuelle Regional-Informationen, die die Dienstanbieter übertragen, ständig aktualisiert. Dazu werden auch Informationen vom Fahrzeug 1 zu den Sendestationen (Pfeile 4, 6, 8, 11) übermittelt. Beispielsweise werden Fahrzeuge 1, die sich in bestimmten Regionen befinden, automatisch gezählt, um Staus diagnostizieren und Umleitungen ausweisen zu können. Fest gebuchte Parkplätze, Hotelzimmer usw. werden aus dem Bestand der freien Plätze herausgenommen. Ein automatischer Informationsaustausch findet also (wie auch bei herkömmlichen Systemen) statt. Die Empfangseinheit 15 kann auch gleichzeitig als Sendeeinheit dienen oder Funk-Informationen werden über das Telefon (Datentelefon) an die Dienstanbieter abgesetzt.

Ist zur Nutzung des jeweiligen Dienstprogramms eine exakte Positionsbestimmung nötig, kann ein an sich bekanntes Satelliten-Positions-Bestimmungssystem Anwendung finden (Pfeile 13, 14 in Figur 1). Software zur Positionsbestimmung kann im allgemeinen Programmspeicher enthalten sein, aber auch gemeinsam mit Dienstprogrammen übertragen werden, wenn diese auf Positionsdaten zurückgreifen müssen (Beispiel Fahrtroutenführung).

Andere bekannte Verkehrsleitsysteme sind am Rand oder im Bereich der Fahrtstrecke 2 angeordnet. Es können Daten von Pfosten 10 am Straßenrand oder über Leitungen 26 auf der Straße zum Fahrzeug 1 übermittelt werden, und es sind auch vom Fahrzeug 1 abgegebene Funk-Informationen empfangbar. Diese Elemente des Verkehrsleitsystems können von allen Dienstanbietern als Sende/Empfangsstation genutzt werden. Auch eine Kombination ist möglich: Dienstprogramme werden von speziellen lokalen Sendestationen übertragen (Pfeile 4 bis 9) und zusätzliche regionale Informationen werden über die Elemente des Verkehrsleitsystems ausgetauscht (Pfeile 11, 12).

Bei geringstem Aufwand für die Fahrzeuginsassen und minimalem Speicherplatzbedarf ist ein Maximum an Informationen verfügbar, wobei die Informationen eine nicht verbesserbare Aktualität aufweisen.

Von besonderem Vorteil ist, daß die Dienstanbieter weltweit frei in der Wahl und Gestaltung ihrer Software sind. Die elektronische Einrichtung im Fahrzeug 1 muß nicht spezifisch für die Nutzung einer bestimmten Art von Dienstprogrammen ausgelegt sein. Es kann eine Hardware ins Fahrzeug 1 eingebaut werden, die dem Nutzer alle späteren Nutzungsmöglichkeiten offenläßt.

## Patentansprüche

1. Verfahren zur Vermittlung regional gültiger Funk-Informationen an einen Fahrer bzw. an Insassen eines Kraftfahrzeugs (1), bei dem Dienstprogramme und die in diesen Dienstprogrammen verwertbaren regional gültigen Informationen in Form von Daten zum Kraftfahrzeug (1) übertragen und in einem Speicher einer Einrichtung zur Informationsverarbeitung und -ausgabe abgelegt werden, **dadurch gekennzeichnet, dass** die Dienstprogramme von regionalen Dienstanbietern dann an das Kraftfahrzeug (1) übersandt und in einem Programmspeicher abgelegt werden, wenn das Kraftfahrzeug in einem sich etwa 50 km bis 100 km um das Kraftfahrzeug (1) erstreckenden Gültigkeitsbereich der regionalen Informationen in Betrieb ist und vom Kraftfahrzeug (1) aus ein Anforderungssignal an eine Sendestation übersandt wird und ein Dienstprogramm dann selbsttätig aus dem Programmspeicher gelöscht wird, wenn das Dienstprogramm über eine vorbestimmte Zeitspanne nicht im Kraftfahrzeug (1) genutzt wird und/oder wenn das Kraftfahrzeug (1) den Gültigkeitsbereich der regionalen Funk-Informationen verlässt.

2. Verfahren nach Anspruch 1, **dadurch gekennzeichnet, dass** alle im Gültigkeitsbereich der regionalen Funk-Informationen verfügbaren Dienstprogramme von einem Programm-Manager verwaltet werden und eine Dienstprogramm-Angebots-Liste im Kraftfahrzeug (1) angezeigt wird, aus der Insassen des Kraftfahrzeugs (1) bei bestehendem Nutzungswunsch eine Auswahl treffen können.

3. Elektronische Einrichtung zur Informationsverarbeitung und -ausgabe innerhalb eines Kraftfahrzeugs (1) mit Hilfe derer regional gültige Informationen unter Nutzung von Dienstprogrammen an einen Fahrer bzw. an Insassen des Kraftfahrzeugs (1) übermittelt werden, wobei die Einrichtung eine Bedieneinheit (16 bis 20), eine Empfangseinheit (15) zum Empfang der von zumindest einer Sendestation in Form von Daten ausgesandten Dienstprogramme und der regional gültigen Funk-Informationen, einen Programmspeicher zur elektronischen Speicherung der Dienstprogramme, eine Datenverarbeitungseinheit zur Verarbeitung der empfangenen Funk-Informationen auf der Basis der Dienstprogramme sowie zumindest eine Ausgabeeinheit (24) zur vorzugsweise visuellen oder akustischen Ausgabe der Informationen aufweist, **dadurch gekennzeichnet, dass** die Empfangseinheit (15) die Dienstprogramme dann empfängt und in dem Programmspeicher ablegt, wenn sich das Kraftfahrzeug (1) in einem sich etwa 50 km bis 100 km um das Kraftfahrzeug erstreckenden Gültigkeitsbereich der regional gültigen Funk-Informationen befindet und ein Anforderungssignal an die Sendestation übermittelt wurde und dass die Dienstprogramme dann selbsttätig aus dem Programmspeicher gelöscht werden, wenn das Dienstprogramm innerhalb einer festgelegten Zeitspanne nicht genutzt wurde oder das Kraftfahrzeug (1) den Gültigkeitsbereich der regional gültigen Informationen verlässt.

4. Elektronische Einrichtung nach Anspruch 3, **dadurch gekennzeichnet, dass** über die Bedieneinheit (16 bis 20) eine Angebotsliste, die die momentan verfügbaren Dienstprogramme beinhaltet, anforderbar und über die Ausgabeeinheit (24) im Kraftfahrzeug (1) ausgebbar ist und einzelne oder alle verfügbaren Dienstprogramme nach Auslösung eines Anforderungssignals über die Empfangseinheit (15) dem Programmspeicher zuführbar sind.

5. Elektronische Einrichtung nach einem der Ansprüche 3 oder 4, **dadurch gekennzeichnet, dass** Dienstprogramme, ausgelöst durch ein von der zugehörigen Sendestation übertragenes oder von der Datenverarbeitungseinheit erzeugtes Löschsignal, aus dem Programmspeicher löschbar sind.

6. Elektronische Einrichtung nach einem der Ansprüche 3 bis 5, **gekennzeichnet durch** ein elektronisches Speicherelement, welches Teil des Programmspeichers sein kann, jedoch nicht von einer Sendestation beeinflussbar ist und in dem fahrzeug- und/oder insassenspezifische und/oder allgemein gültige Dienstprogramme/Daten ohne einen wesentlichen regionalen Bezug abspeicherbar sind.

7. Elektronische Einrichtung nach einem der Ansprüche 3 bis 6, **gekennzeichnet durch** eine Sendeeinrichtung, über die Funk-Informationen von dem Kraftfahrzeug (1) an den Anbieter des jeweiligen Dienstprogramms übermittelbar sind.

## Claims

1. Method for relaying regionally valid radio information to a driver or to passengers of a motor vehicle (1), in which utility programs and the regionally valid information which can be utilised in these utility programs are transmitted in the form of data to the motor vehicle (1) and filed in a memory of a device for information processing and output, **characterised in that** the utility programs are sent to the motor vehicle (1) by regional service providers and filed in a program memory when the motor vehicle is running within a range of validity of the regional information extending approximately 50 km to 100 km around the motor vehicle (1) and a request signal is sent from the motor vehicle (1) to a transmitting station and a utility program is automatically deleted from the program memory when the utility program is not used in the motor vehicle (1) over a predetermined period of time and/or when the motor vehicle (1) leaves the range of validity of the regional radio information.

2. Method according to claim 1, **characterised in that** all the utility programs available within the range of validity of the regional radio information are managed by a program manager and a utility program availability list is indicated in the motor vehicle (1), from which passengers of the motor vehicle (1) can make a choice when there is a desire to use them.

3. Electronic device for information processing and output within a motor vehicle (1) by means of which regionally valid information is relayed to a driver or to passengers of the motor vehicle (1) using utility programs, wherein the device comprises a control unit (16 to 20), a receiving unit (15) for receiving the utility programs sent in the form of data from at least one transmitting station and the regionally valid radio information, a program memory for electronic storage of the utility programs, a data processing unit for processing the received radio information on the basis of the utility programs and at least one output unit (24) for preferably visual or acoustic output of the information, **characterised in that** the receiving unit (15) receives the utility programs and files them in the program memory when the motor vehicle (1) is located within a range of validity of the regionally valid radio information extending approximately 50 km to 100 km around the motor vehicle and a request signal has been transmitted to the transmitting station and **in that** the utility programs are automatically deleted from the program memory when the utility program has not been used within a fixed period of time or the motor vehicle (1) leaves the range of validity of the regionally valid information.

4. Electronic device according to claim 3, **characterised in that** by means of the control unit (16 to 20) an availability list which contains the instantaneously available utility programs can be requested and can be outputted via the output unit (24) in the motor vehicle (1) and single or all available utility programs after triggering of a request signal can be supplied via the receiving unit (15) to the program memory.

5. Electronic device according to either of claims 3 or 4, **characterised in that** utility programs, triggered by a delete signal transmitted from the associated transmitting station or generated by the data processing unit, can be deleted from the program memory.

6. Electronic device according to any of claims 3 to 5, **characterised by** an electronic memory element which can be part of the program memory, but cannot be influenced by a transmitting station and in which vehicle-specific and/or passenger-specific and/or generally valid utility programs/data can be stored without an essential regional reference.

7. Electronic device according to any of claims 3 to 6, **characterised by** a transmitting device via which radio information can be transmitted from the motor vehicle (1) to the provider of the respective utility program.

## Revendications

1. Procédé de transmission d'informations radiodiffusées à caractère régional à un conducteur ou aux passagers d'un véhicule automobile (1), selon lequel des programmes de service et les informations à caractère régional exploitables dans lesdits programmes de service sont transmises au véhicule (1) sous la forme de données et sont mémorisées dans une mémoire d'un dispositif à des fins de traitement et d'édition d'informations, **caractérisé en ce que** les programmes de service sont transmis au véhicule (1) par des fournisseurs régionaux et inscrits dans une mémoire de programme, lorsque le véhicule est en service à l'intérieur d'une zone de validité des informations à caractère régional qui s'étend sur environ 50 km à 100 km autour dudit véhicule (1) et **en ce qu'**un signal d'appel est envoyé par le véhicule (1) à une station émettrice et qu'un programme de service est automatiquement effacé de la mémoire, lorsque ledit programme n'est pas utilisé dans le véhicule (1) pendant un laps de temps prédéterminé et/ou lorsque le véhicule (1) quitte la zone de validité des informations radiodiffusées à caractère régional.

2. Procédé selon la revendication 1, **caractérisé en ce que** tous les programmes de service disponibles dans la zone de validité des informations radiodiffusées à caractère régional sont gérés par un gestionnaire de programmes et une liste des programmes de service offerts est affichée dans le véhicule (1), liste sur la base de laquelle les passagers du véhicule (1) peuvent effectuer une sélection en fonction de leurs souhaits.

3. Dispositif électronique pour le traitement et l'édition d'informations à l'intérieur d'un véhicule (1) à l'aide duquel des informations à caractère régional sont transmises à un conducteur ou aux passagers du véhicule (1) moyennant l'utilisation de programmes de service, le dispositif comprenant un module de commande (16 à 20), un module de réception (15) pour la réception des programmes de service et des informations radiodiffusées à caractère régional émises sous la forme de données par la station émettrice au nombre d'au moins une, une mémoire de programmes pour le stockage électronique des programmes de service, un module de traitement de données pour le traitement des informations radio reçues sur la base des programmes de service ainsi qu'au moins un module d'édition (24) pour l'édition des informations, de préférence sous forme visuelle ou acoustique, **caractérisé en ce que** le module de réception (15) reçoit les programmes de service et les inscrit dans la mémoire de programmes lorsque le véhicule (1) se trouve à l'intérieur d'une zone de validité des informations radio à caractère régional, d'environ 50 à 100 km autour du véhicule et qu'un signal d'appel a été transmis à la station émettrice et **en ce que** les programmes de service sont ensuite effacés automatiquement de la mémoire de programmes, lorsque le programme de service n'a pas été utilisé pendant un laps de temps déterminé ou que le véhicule (1) quitte la zone de validité des informations radio à caractère régional.

4. Dispositif électronique selon la revendication 3, **caractérisé en ce qu'**une liste d'offres qui contient les programmes de service disponibles sur l'instant peut être appelée à l'aide du module de commande (16 à 20) et éditée à l'aide du module d'édition (24) dans le véhicule (1) et que des programmes de service isolés ou tous les programmes de service disponibles après émission d'un signal d'appel peuvent être introduits dans la mémoire de programmes par l'intermédiaire du module de réception (15).

5. Dispositif électronique selon une des revendications 3 ou 4, **caractérisé en ce que** des programmes de service peuvent être effacés de la mémoire de programme sur déclenchement par un signal d'effacement transmis par la station émettrice concernée ou produit par le module de traitement des données.

6. Dispositif électronique selon une des revendications 3 à 5, **caractérisé par** un élément de mémoire électronique, qui peut faire partie de la mémoire de programme, mais ne peut pas être influencé par une station émettrice et dans lequel des programmes de service/données spécifiques au véhicule et/ou aux passagers et/ou généraux peuvent être mémorisés sans lien régional essentiel.

7. Dispositif électronique selon une des revendications 3 à 6, **caractérisé par** un dispositif d'émission par l'intermédiaire duquel les informations radio peuvent être transmises par le véhicule (1) au fournisseur du programme de service concerné.
